# EUROPEAN PATENT SPECIFICATION

(11) **EP 3 936 580 B1**
(45) Date of publication and mention of the grant of the patent: **13.12.2023**
(21) Application number: 21176818.9
(22) Date of filing: 31.05.2021
(51) Int. Cl.: C09D 11/40, C09D 11/38, C09D 11/328, D06P 5/30

(54) **INK SET FOR INKJET PRINTING AND INKJET PRINTING METHOD**
TINTENSATZ FÜR TINTENSTRAHLDRUCK UND TINTENSTRAHLDRUCKVERFAHREN
JEU D'ENCRE POUR IMPRESSION À JET D'ENCRE ET PROCÉDÉ D'IMPRESSION À JET D'ENCRE

(30) Priority: 08.07.2020 JP 2020117433
(43) Date of publication of application: 12.01.2022
(73) Proprietor: KONICA MINOLTA, INC., Tokyo 100-7015 (JP)
(72) Inventor: KUROGI, Yusuke, Tokyo, 100-7015 (JP); SHIRAISHI, Masaharu, Tokyo, 100-7015 (JP)
(74) Representative: Gille Hrabal Partnerschaftsgesellschaft mbB Patentanwälte

(56) References cited:
- EP-A1- 1 148 104
- EP-A1- 2 537 679
- US-A1- 2009 246 378
- US-A1- 2016 214 401
- US-A1- 2019 301 084
- US-B1- 6 281 269

## Description

### BACKGROUND

### Technical Field

The present invention relates an ink set for inkjet printing and an inkjet printing method. More particularly, the present invention relates to an ink set for inkjet printing having a penetration liquid for inkjet printing which has improved permeability and is excellent in color development stability such as color inhibition resistance and color unevenness resistance, and an inkjet printing method using the same.

### Description of the Related Art

In recent years, in addition to the screen printing method and the roller printing method, an inkjet printing method has been widely used as a method of printing images such as letters, pictures, and patterns on fabrics such as woven fabrics and non-woven fabrics, which enables to perform image processing by a computer to print images substantially without printing plate.

The printing of the fabric by this inkjet printing method is performed with a method including a step of ejecting an ink from an inkjet head and landing it on a fabric; a step of imparting vapor to the fabric on which the ink is landed to fix the dye contained in the ink to the fibers of the fabric; and a step of washing the fabric to which the vapor is imparted to remove the dye which has not been fixed.

In an inkjet printing method, in order to further enhance the aesthetic appearance of a printed fabric, it is required that the same color tone is exhibited not only on the printing surface of the fabric on the side on which the ink is landed but also on the back surface of the fabric on the opposite side, that is, the printed ink penetrates to the back surface.

In response to the above problem, a method has been proposed in which a color ink is permeated to a back surface by applying a penetration liquid, and a surface side image density and a back side image density are brought close to each other.

For example, Patent Document 1 (JP-A 2019-077980) discloses an inkjet printing method in which a penetration liquid containing a nitrogen-containing compound having a boiling point of 230 to 260 °C and an alkyl polyol having a boiling point of 230 to 260 °C is imparted to a fabric before ink application. In Patent Document 1, it is said that, by approximating the composition of the penetration liquid to the solvent composition of the ink, the permeability of the ink into the fabric may be improved, and the difference in the density of the front and back surfaces of the print is hardly caused. However, in the method disclosed in Patent Document 1, the penetration liquid contains a certain amount of an organic solvent having a high boiling point, and although the permeability may be improved by holding the penetration liquid on the fabric, there has been a problem that the residual solvent becomes large at the time of color development and tends to cause uneven color development and decrease in density due to color development inhibition.

In addition, Patent Document 2 (JP-A 2016-141802) discloses a penetration liquid for inkjet printing which contains 20% by mass or more of a compound having a lactam structure, reduces color development inhibition at the time of color development, and hardly causes a difference in color development on the front and back surfaces of a print. However, in Patent Document 2, no mention is made of color unevenness at all.

In addition, Patent Document 3 (JP-A 2017-031229) discloses a penetration liquid for inkjet printing containing a water-soluble organic solvent, a surfactant, a chelating agent, and an aromatic compound. In Patent Document 3, it is said that by containing an aromatic compound, it is possible to obtain a penetration liquid for inkjet printing which can improve conductivity, improve material compatibility performance, and improve ejection stability. However, in the invention described in Patent Document 3, as in Patent Documents 1 and 2 described above, since an organic solvent having a high boiling point is contained, there is a problem that color development inhibition and color unevenness tend to occur.

In addition, Patent Document 4 (JP-A 2020-033660) discloses a penetration liquid for inkjet printing containing a glycol-based solvent having specific characteristics and water. However, even in the invention described in Patent Document 4, by applying a glycol-based solvent, although the permeability is improved, but no mention is made of the effect on color development. Additionally, US 2019/301084 A1 discloses an ink set for printing on textile comprising a large amount of surfactants.

Therefore, development of an inkjet printing method using a penetration liquid for inkjet printing, which has improved permeability and improved color development stability, has been desired.

### SUMMARY

The present invention has been made in view of the above problems. An object of the present invention is to provide an ink set for inkjet printing having a penetration liquid achieving improved permeability and excellent color development stability such as color development inhibition resistance and color development unevenness resistance, and to provide an inkjet printing method using the ink set.

As a result of extensive studies in view of the above problems, the present invention has been found. It is an ink set for inkjet printing, which is composed of a penetration liquid for an inkjet printing and a color ink for inkjet printing, wherein the penetration liquid for inkjet printing contains a surfactant A, an organic solvent, and water; a total content of the surfactant A is equal to or higher than a specific amount; and the color ink for inkjet printing contains a dye. Thereby, it is possible to obtain an ink set for inkjet printing having improved permeability and excellent color development stability such as color inhibition resistance and color unevenness resistance, and the present invention has been achieved.

To achieve at least one of the abovementioned objects, according to an aspect of the present invention, an ink set that reflects an aspect of the present invention is as follows.

In other words, the above problem of the present invention is solved by the ink set according claim 1.

According to the present invention, it is possible to provide an ink set for inkjet printing having a penetration liquid for inkjet printing which has improved permeability and is excellent in color development stability such as color inhibition resistance and color unevenness resistance, and an inkjet printing method using the same.

The technical features of the fixing member having the constitution defined in the present invention and the mechanism for expressing the effects thereof are inferred as follows.

Conventionally, in an inkjet printing method, a method of improving permeability of a color ink by using a penetration liquid is disclosed in, for example, Patent Documents 1 to 4 described above.

Usually, an organic solvent is contained in the penetration liquid, and after the penetration liquid is applied on the surface of the fabric by this organic solvent, it becomes possible to improve the permeability of the color ink to the fabric. Further, even in a method of applying the penetration liquid after applying the color ink, it is possible to improve permeability.

However, when a penetration liquid is used, while the permeability may be improved, on the other hand, there has been a problem that, as compared with a case where a penetration liquid is not used, the amount of residual solvent at the time of color development increases, and color development inhibition and color unevenness tend to occur.

In the present invention, as a result of intensive studies on the above problems, it has been found that, by increasing the amount of the surfactant in the penetration liquid, it becomes possible to prevent the color development inhibition. In addition, it was clarified that the effect was also exhibited in the reduction of the color development unevenness. As this factor, it is presumed that the surfactant contained in the penetration liquid is adsorbed on the fiber surface constituting the fabric, thereby improving the wettability of the fiber, improving the reactivity of the reactive dye and the acid dye, or facilitating incorporation of the disperse dye into the fiber interior. Further, it is considered that the diffusivity of the dye is improved and the uneven color development is reduced.

On the other hand, it has also been found that excessively increasing the amount of surfactant causes a decrease in surface concentration in the fabric, and as a result, a decrease in color development. Although this seems to be also possible to obtain the above effect even by increasing the amount of surfactant in the color ink, increasing the amount of the surfactant in the color ink may cause the color ink to penetrate to a place where it is not necessary to penetrate in the fabric, and as a result, bleeding may increase and the surface density may decrease. By providing the penetrating ink separately from the color ink, it is possible to permeate only the point to be permeated selectively, and it is possible to widen the range of the production adaptability.

In other words, in order to provide a penetration liquid which satisfies the printing quality, it is necessary to prepare the penetration liquid separately from the color ink. Further, in order to achieve both color development and permeability, it is presumed that the object effect of the present invention may be achieved by appropriately adjusting the balance of the amount of surfactant between the penetration liquid and the color ink.

### BRIEF DESCRIPTION OF THE DRAWINGS

The advantages and features provided by one or more embodiments of the invention will become more fully understood from the detailed description given hereinbelow and the appended drawings which are given by way of illustration only, and thus are not intended as a definition of the limits of the present invention.
FIG. 1 is a schematic diagram showing an example of a configuration of an inkjet recording apparatus applicable to an inkjet printing method.
FIG. 2 is a process flow diagram showing an example of a printing process in an inkjet printing method.

### DETAILED DESCRIPTION OF THE EMBODIMENTS

Hereinafter, one or more embodiments of the present invention will be described.

The ink set for inkjet printing of the present invention includes at least a penetration liquid for inkjet printing and a color ink for inkjet printing, wherein the penetration liquid for inkjet printing contains a surfactant A, an organic solvent, and water, and the total content of the surfactant A is 2% by mass or more; and the color ink for inkjet printing contains a dye, wherein the total content of the surfactant A contained in the penetration liquid for inkjet printing is 30 times or more and less than 80 times a total content of a surfactant B contained in the color ink for inkjet printing.

This feature is a technical feature common to the present invention according to each of the following embodiments.

As an embodiment of the present invention, the total content of the surfactant A contained in the penetration liquid for inkjet printing is 30 times or more and less than 80 times the total content of the surfactant B contained in the color ink for inkjet printing from the viewpoint of further improving the permeability of the penetration liquid and further improving the color development stability such as the color inhibition resistance and the color unevenness resistance.

It is preferable that the total content of the surfactant A in the penetration liquid for inkjet printing is less than 5% by mass in view of further improving the object effect of the present invention.

It is preferable that the surfactant A contained in the penetration liquid for inkjet printing is at least one selected from acetylene glycol-based surfactants in view of obtaining a penetration liquid having more excellent permeability.

It is preferable that the organic solvent contained in the penetration liquid for inkjet printing is at least one selected from alkyl polyols in view of improving the object effect of the present invention.

It is preferable that the boiling point of the alkyl polyol contained in the penetration liquid for inkjet printing is 200 °C or less in terms of reducing the amount of residual solvent at the time of color development and suppressing uneven color development and color development inhibition.

It is preferable that the total content of the organic solvent contained in the penetration liquid for inkjet printing is 40% by mass or more when the total mass of the penetration liquid for inkjet printing is set to 100% by mass in view of obtaining a penetration liquid having more excellent permeability.

In the inkjet printing method of the present invention, at least a penetration liquid for inkjet printing and a color ink for inkjet printing are used. The penetration liquid for inkjet printing contains a surfactant A, an organic solvent, and water, and the total content of the surfactant A is 2.0% by mass or more, and the color ink for inkjet printing contains a dye, and after the penetration liquid for inkjet printing is adhered to a fabric, a color ink for inkjet printing is adhered to form a printing image.

Hereinafter, the present invention, its constituent elements, and configuration and embodiments for carrying out the present invention will be described. In the present description, when two figures are used to indicate a range of value before and after "to", these figures are included in the range as a lowest limit value and an upper limit value.

### <<Ink set for inkjet printing>>

The ink set for inkjet printing of the present invention (hereinafter, also simply referred to as "ink set") includes a penetration liquid for inkjet printing (hereinafter, also simply referred to as "penetration liquid") and a color ink for inkjet printing (hereinafter, also simply referred to as "color ink"), wherein the penetration liquid for inkjet printing contains at least a surfactant A, an organic solvent, and water, the total content of the surfactant A is 2.0% by mass or more, and the color ink for inkjet printing contains at least a dye.

Further, it is preferable that the total content of the surfactant A contained in the penetration liquid is 30 times or more and less than 80 times the total content of the surfactant B contained in the color ink.

### [Penetration liquid for inkjet printing]

The penetration liquid for inkjet printing according to the present invention is characterized in that it contains a surfactant A, an organic solvent, and water.

Hereinafter, the constituent materials of the surfactant A, the organic solvent, and the others for the penetration liquid will be described in detail.

### [Surfactant A]

In the present invention, the total content of the surfactant A contained in the penetration liquid is 2% by mass or more. The total content of the surfactant A referred to in the present invention is a value in which the total mass containing the surfactant A is expressed as % by mass when the total mass of the penetration liquid is set to 100% by mass. The total content of the surfactant A is 2% by mass or more, but is preferably within a range of 2% by mass or more and less than 10% by mass, and more preferably within a range of 2% by mass or more and less than 5% by mass. The surfactant A according to the present invention may be composed of one kind or may be composed of 2 or more kinds of surfactants. When the surfactant A is composed of 2 or more kinds, the total mass of 2 or more kinds of surfactants is defined as the total content of the surfactant A contained in the penetration liquid.

### (Acetylene glycol-based surfactant)

In the present invention, the surfactant A contained in the penetration liquid is not particularly limited, and examples thereof include an acetylene glycol-based surfactant, a fluorine-based surfactant, and a silicone-based surfactant. Of these, from the viewpoint of penetration into the fabric, an acetylene glycol-based surfactant is preferably used.

The acetylene glycolic-based surfactant is not particularly limited, but is preferably one or more selected from alkylene oxide adducts such as, for example, 2,4,7,9-tetramethyl-5-decyne-4,7-diol, 2,4,7,9-tetramethyl-5-decyne-4,7-diol, and alkylene oxide adducts such as 2,4-dimethyl-5-decyne-4-ol and 2,4-dimethyl-5-decyne-4-ol.

The acetylene glycol-based surfactant may also be obtained as a commercially available product, and examples thereof include E-series such as OLFINE 104 series and OLFINE E1004, E1006, E1010, E1020, and E1030, OLFINE PD-002W, SURFYNOL 465, and SURFYNOL 61, (manufactured by Nissin Chemical Industry Co., Ltd.). One kind of the acetylene glycol-based surfactants may be used alone, or 2 or more kinds thereof may be used in combination.

Examples of other surfactants include fluorine-based surfactants (e.g., perfluoroalkyl sulfonate, perfluoroalkyl carboxylic acid salt, perfluoroalkyl phosphate, perfluoroalkyl ethylene oxide adduct, perfluoroalkyl betaine, perfluoroalkylamine oxide compound). Further, examples of the silicone-based surfactant include a polysiloxane-based compound and a polyether-modified organosiloxane.

### (Surfactant content ratio between the penetration liquid and the color ink)

In the ink set of the present invention, the total content of the surfactant A contained in the penetration liquid for inkjet printing is 30 times or more and less than 80 times, more preferably 40 times or more and less than 60 times the total content of the surfactant B contained in the color ink for inkjet printing.

The total content of each surfactant referred to in the present invention is expressed as a ratio of (concentration of surfactant A (% by mass)/concentration of surfactant B (% by mass)) when expressed in terms of the content concentration of each surfactant A and surfactant B (% by mass)), when the total mass of the penetration liquid or the color ink is set to 100% by mass.

In the present invention, by setting the ratio of the concentration (% by mass) of the surfactant A to the concentration (% by mass) of the surfactant B within the limit defined above, it is possible to obtain a print which improves the permeability of the color ink into the fabric and is excellent in color development stability such as color inhibition resistance and color unevenness resistance.

### [Organic solvent]

In the penetration liquid according to the present invention, it is characterized in that it contains an organic solvent together with a surfactant A.

The organic solvent applicable to the present invention is not particularly limited, and examples thereof include a glycol ether solvent, a nitrogen containing solvent, an aprotic polar solvent, an alkyl polyol solvent, and a mono-alcohol solvent. The organic solvent may be used alone or in combination of 2 or more. The total content of the organic solvent contained in the penetration liquid according to the present invention is preferably 40% by mass or more, when the total mass of the penetration liquid is set to 100% by mass.

In the present invention, it is preferable that at least one organic solvent is an alkyl polyol.

### (Alkyl polyol)

The alkyl polyol applicable to the present invention is not particularly limited. Examples thereof include 1,2-pentanediol (104 °C), propylene glycol (188 °C), 1,2-butanediol (197 °C), 1,3-propanediol (214 °C), 1,2-hexanediol (230 °C), 2-methyl-2-propyl-1,3-propanediol (230 °C), 1,5-pentanediol (242 °C), 2-ethyl-1,3-hexanediol (244 °C), 3-methyl-1,5-pentanediol (249 °C), and 1,6-hexanediol (values in parentheses represent standard boiling points). Among these, an alkyl polyol having a boiling point of 200 °C or less is preferred, and examples thereof include propylene glycol (188 °C), 1,2-butanediol (193 °C), and ethylene glycol (197 °C).

By using such an alkyl polyol, when the penetration liquid is adhered by an inkjet method, the clogging reliability tends to be further improved. These alkyl polyols may be used alone or in combination of two or more.

The content of the alkyl polyol is preferably 10 to 70% by mass, and more preferably 20 to 60% by mass, based on 100% by mass of the penetration liquid for inkjet printing.

### (Other organic solvent)

As an organic solvent applicable in the present invention, a glycol ether may be mentioned in addition to the above alkyl polyol.

The glycol ether is not particularly limited. Examples thereof include dipropylene glycol dimethyl ether (171 °C), diethylene glycol ethyl methyl ether (176 °C), diethylene glycol isopropyl methyl ether (179 °C), diethylene glycol monomethyl ether (189 °C), diethylene glycol monomethyl ether (194 °C), diethylene glycol butyl methyl ether (215 °C), triethylene glycol dimethyl ether (216 °C), diethylene glycol monobutyl ether (230 °C), diethylene glycol (245 °C), ethylene glycol monophenyl ether (245 °C), triethylene glycol monomethyl ether (249 °C), and diethylene glycol dibutyl ether (256 °C) (numbers in parentheses represent standard boiling points). Among these, diethylene glycol monobutyl ether (boiling point 230 °C) and triethylene glycol monomethyl ether (boiling point 230 °C) are more preferred.

### [Water]

The water is not particularly limited, and pure water such as ion-exchanged water, ultra-filtered water, reverse osmosis water, distilled water, or ultrapure water may be used. The content of water may be appropriately determined as necessary without any particular limitation, and water may be included as the remainder of the other components contained in the permeate. For example, the content of water may be within a range of 30 to 80% by mass based on the total amount (100% by mass) of the penetration liquid for inkjet printing.

### [Other additive]

In addition to the above additives, a pH adjusting agent, a chelating agent, a humectant, a reduction inhibitor, a preservative, and a fungicide may be added to the penetration liquid according to the present invention.

Examples of the preservative and the fungicide include an aromatic halogen compound (e.g., Preventol CMK, manufactured by Bayer Co., Ltd.), methylene dithiocyanate, a halogen containing nitrogen-sulfur compound, and a 1,2-benzisothiazoline-3-one (e.g., PROXEL GXL, manufactured by Lonza Japan Co., Ltd.).

Examples of the pH adjusting agent include urea and sodium hydroxide.

### [Liquid properties of penetration liquid]

The viscosity of the penetration liquid at 25 °C is preferably 2 to 10 mPa·s, more preferably 4 to 8 mPa·s, and still more preferably about 7 mPa·s. The viscosity of the ink composition may be determined by measuring the ink composition according to JIS Z8809 using a vibrating viscometer. Further, the surface tension of the penetration liquid is preferably within a range of 20 to 40 mN/m.

### [Preparation method of penetration liquid]

The penetration liquid according to the present invention may be prepared by mixing each of the above-mentioned constituent components in an arbitrary order, performing filtration if necessary, and removing impurities. As a method of mixing the respective constituent materials, a method in which a material is sequentially added to a container equipped with a stirring device such as a mechanical stirrer or a magnetic stirrer and stirred and mixed is suitably used. As a filtration method, for example, centrifugal filtration, or filter filtration may be performed if necessary.

Further, it is also preferable that the penetration liquid according to the present invention is subjected to a degassing treatment.

When a penetration liquid is applied to a fabric by an inkjet method, if a dissolved gas is contained in the penetration liquid, fine bubbles are generated in the penetration liquid when the penetration liquid is ejected from the inkjet head, these bubbles may cause a discharge failure. Therefore, it is preferable to remove such dissolved gas from the penetration liquid. As a degassing method thereof, there are a method of degassing by a physical method such as boiling or reduced pressure, and a chemical method of adding and mixing an absorbent into a pretreatment ink, and may be appropriately selected and applied.

### [Color ink for inkjet printing]

The color ink for inkjet printing according to the present invention is characterized in that it contains a dye as a color material, and more preferably it contains a surfactant B. In addition, an organic solvent, urea, sugar, a pH adjusting agent, a chelating agent, a preservative, an antirust agent, and other components may be contained.

Hereinafter, the configuration of the color ink will be described.

### [Color material]

As a dye applicable to a color ink according to the present invention, there is no particular limitation, and examples thereof include a disperse dye, a reactive dye, an acid dye, and a direct dye. As the hue of each color ink constituting the color ink, yellow, magenta, cyan, black, blue, green, and red are preferably used, and particularly preferably, each dye of yellow, magenta, cyan, and black is used.

Specific compounds of dyes, which are color materials preferably used in the present invention, will be described below, but the present invention is not limited to these exemplified compounds.

### (Disperse dye)

As a disperse dye preferably used in the color ink according to the present invention, the following are cited.
C. I. Disperse Yellow: 3, 4, 5, 7, 9, 13, 23, 24, 30, 33, 34, 42, 44, 49, 50, 51, 54, 56, 58, 60, 63, 64, 66, 68, 71, 74, 76, 79, 82, 83, 85, 86, 88, 90, 91, 93, 98, 99, 100, 104, 108, 114, 116, 118, 119, 122, 124, 126, 135, 140, 141, 149, 160, 162, 163, 164, 165, 179, 180, 182, 183, 184, 186, 192, 198, 199, 202, 204, 210, 211, 215, 216, 218, 224, 227, 231 and 232;
C. I. Disperse Orange: 1, 3, 5, 7, 11, 13, 17, 20, 21, 25, 29, 30, 31, 32, 33, 37, 38, 42, 43, 44, 45, 46, 47, 48, 49, 50, 53, 54, 55, 56, 57, 58, 59, 61, 66, 71, 73, 76, 78, 80, 89, 90, 91, 93, 96, 97, 119, 127, 130, 139, and 142;
C. I. Disperse Red: 1, 4, 5, 7, 11, 12, 13, 15, 17, 27, 43, 44, 50, 52, 53, 54, 55, 56, 58, 59, 60, 65, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 298, 302, 303, 310, 311, 312, 320, 324, and 328;
C. I. Disperse Violet: 1, 4, 8, 23, 26, 27, 28, 31, 33, 35, 36, 38, 40, 43, 46, 48, 50, 51, 52, 56, 57, 59, 61, 63, 69, and 77;
C. I. Disperse Green: 9;
C. I. Disperse Brown: 1, 2, 4, 9, 13, and 19;
C. I. Disperse Blue: 3, 7, 9, 14, 16, 19, 20, 26, 27, 35, 43, 44, 54, 55, 56, 58, 60, 62, 64, 71, 72, 73, 75, 79, 81, 82, 83, 87, 91, 93, 94, 95, 96, 102, 106, 108, 112, 113, 115, 118, 120, 122, 125, 128, 130, 139, 141, 142, 143, 146, 148, 149, 153, 154, 158, 165, 167, 167: 1, 171, 173, 174, 176, 181, 183, 185, 186, 187, 189, 197, 198, 200, 201, 205, 207, 211, 214, 224, 225, 257, 259, 267, 268, 270, 284, 285, 287, 288, 291, 293, 295, 297, 301, 315, 330, and 333; and
C. I. Disperse Black: 1, 3, 10, and 24.

In an inkjet printing method using a disperse dye, when color is developed by a high temperature treatment, it is preferable to select a disperse dye having good sublimation fastness so that the dye does not cause contamination due to sublimation of the dye to a white area of a machine or a fabric.

### (Reactive dye)

As a reactive dye preferably used in the color ink according to the present invention, the following are cited.
C. I. Reactive Yellow: 2, 3, 7, 15, 17, 18, 22, 23, 24, 25, 27, 37, 39, 42, 57, 69, 76, 81, 84, 85, 86, 87, 92, 95, 102, 105, 111, 125, 135, 136, 137, 142, 143, 145, 151, 160, 161, 165, 167, 168, 175, and 176;
C. I. Reactive Orange: 1, 4, 5, 7, 11, 12, 13, 15, 16, 20, 30, 35, 56, 64, 67, 69, 70, 72, 74, 82, 84, 86, 87, 91, 92, 93, 95, and 107;
C. I. Reactive Red: 2, 3, 3: 1, 5, 8, 11, 21, 22, 23, 24, 28, 29, 31, 33, 35, 43, 45, 49, 55, 56, 58, 65, 66, 78, 83, 84, 106, 111, 112, 113, 114, 116, 120, 123, 124, 128, 130, 136, 141, 147, 158, 159, 171, 174, 180, 183, 184, 187, 190, 193, 194, 195, 198, 218, 220, 222, 223, 226, 228, and 235;
C. I. Reactive Violet: 1, 2, 4, 5, 6, 22, 23, 33, 36, and 38;
C. I. Reactive Blue: 2, 3, 4, 7, 13, 14, 15, 19, 21, 25, 27, 28, 29, 38, 39, 41, 49, 50, 52, 63, 69, 71, 72, 77, 79, 89, 104, 109, 112, 113, 114, 116, 119, 120, 122, 137, 140, 143, 147, 160, 161, 162, 163, 168, 171, 176, 182, 184, 191, 194, 195, 198, 203, 204, 207, 209, 211, 214, 220, 221, 222, 231, 235, and 236;
C. I. Reactive Green: 8, 12, 15, 19, and 21;
C. I. Reactive Brown: 2, 7, 9, 10, 11, 17, 18, 19, 21, 23, 31, 37, 43, and 46; and
C. I. Reactive Black: 5, 8, 13, 14, 31, 34, and 39.

### (Acid dye)

As an acid dye preferably used in the color ink according to the present invention, the following are cited.
C.I. Acid Yellow: 1, 3, 11, 17, 18, 19, 23, 25, 36, 38, 40, 40: 1, 42, 44, 49, 59, 59: 1, 61, 65, 67, 72, 73, 79, 99, 104, 110, 159, 169, 176, 184, 193, 200, 204, 207, 215, 219, 219: 1, 220, 230, 232, 235, 241, 242, and 246;
C. I. Acid Orange: 3, 7, 8, 10, 19, 22, 24, 51, 51 S, 56, 67, 74, 80, 86, 87, 88, 89, 94, 95, 107, 108, 116, 122, 127, 140, 142, 144, 149, 152, 156, 162, 166, and 168;
C. I. Acid Red: 1, 6, 8, 9, 13, 18, 27, 35, 37, 52, 54, 57, 73, 82, 88, 97, 97: 1, 106, 111, 114, 118, 119, 127, 131, 138, 143, 145, 151, 183, 195, 198, 211, 215, 217, 225, 226, 249, 251, 254, 256, 257, 260, 261, 265, 266, 274, 276, 277, 289, 296, 299, 315, 318, 336, 337, 357, 359, 361, 362, 364, 366, 399, 407, and 415;
C. I. Acid Violet: 17, 19, 21, 42, 43, 47, 48, 49, 54, 66, 78, 90, 97, 102, 109, and 126;
C. I. Acid Blue: 1, 7, 9, 15, 23, 25, 40, 61: 1, 62, 72, 74, 80, 83, 90, 92, 103, 104, 112, 113, 114, 120, 127, 127: 1, 128, 129, 138, 140, 142, 156, 158, 171, 182, 185, 193, 199, 201, 203, 204, 205, 207, 209, 220, 221, 224, 225, 229, 230, 239, 258, 260, 264, 277: 1, 278, 279, 280, 284, 290, 296, 298, 300, 317, 324, 333, 335, 338, 342, and 350;
C. I. Acid Green: 9, 12, 16, 19, 20, 25, 27, 28, 40, 43, 56, 73, 81, 84, 104, 108, and 109;
C. I. Acid Brown: 2, 4, 13, 14, 19, 28, 44, 123, 224, 226, 227, 248, 282, 283, 289, 294, 297, 298, 301, 355, 357, and 413; and
C. I. Acid Black: 1, 2, 3, 24, 24: 1, 26, 31, 50, 52, 52: 1, 58, 60, 63, 63 S, 107, 109, 112, 119, 132, 140, 155, 172, 187, 188, 194, 207, and 222.

### (Direct dye)

As a direct dye preferably used in the color ink according to the present invention, the following are cited.
C. I. Direct Yellow: 8, 9, 10, 11, 12, 22, 27, 28, 39, 44, 50, 58, 86, 87, 98, 105, 106, 130, 137, 142, 147, and 153;
C. I. Direct Orange: 6, 26, 27, 34, 39, 40, 46, 102, 105, 107, and 118;
C. I. Direct Red: 2, 4, 9, 23, 24, 31, 54, 62, 69, 79, 80, 81, 83, 84, 89, 95, 212, 224, 225, 226, 227, 239, 242, 243, and 254;
C. I. Direct Violet: 9, 35, 51, 66, 94, and 95;
C. I. Direct Blue: 1, 15, 71, 76, 77, 78, 80, 86, 87, 90, 98, 106, 108, 160, 168, 189, 192, 193, 199, 200, 201, 202, 203, 218, 225, 229, 237, 244, 248, 251, 270, 273, 274, 290, and 291;
C. I. Direct Green: 26, 28, 59, 80, and 85;
C. I. Direct Brown: 44, 44:1, 106, 115, 195, 209, 210, 212:1, 222, and 223; and
C. I. Direct Black: 17, 19, 22, 32, 51, 62, 108, 112, 113, 117, 118, 132, 146, 154, 159, and 169.

In the present invention, the content of the color material contained in the color ink is preferably 1 to 25% by mass, more preferably 2 to 20% by mass, based on the total mass of the color ink.

### [Surfactant B]

The surfactant B applicable to the color ink according to the present invention is not particularly limited. For example, an acetylene glycol-based surfactant, a fluorine-based surfactant, and a silicone-based surfactant, similar to that used in the penetration liquid described above may be used.

When these surfactants B are used, they may be used alone or in combination of 2 or more kinds, and it is preferable to add them in a range of 0.001 to 1% by mass based on the total mass of the color ink in view of achieving arbitrary adjustment of the surface tension of the color ink.

### [Organic solvent]

As the water-soluble organic solvent used in the color ink according to the present invention, the same solvent as that used in the above-mentioned penetration liquid may be used. The content of the water-soluble organic solvent is preferably within a range of 10 to 60% by mass based on the total mass of the color ink.

### [Other additive]

The color ink according to the present invention may contain the same additives as that used in the above-mentioned penetration liquid. Examples thereof include an inorganic salt, a pH adjusting agent, a chelating agent, a humectant, a reduction inhibitor, a preservative, and a fungicide. Further, if necessary, it may contain an additive which may be usually used in an inkjet ink, including an antirust agent such as benzotriazole, an antioxidant, an ultraviolet absorber, an oxygen absorber, and a dissolution aid.

Examples of the inorganic salt include sodium chloride, sodium sulfate, magnesium chloride, and magnesium sulfate. However, the present invention is not limited thereto.

Examples of the preservative and the fungicide include an aromatic halogen compound (e.g., Preventol CMK, manufactured by Bayer Co., Ltd.), methylene dithiocyanate, a halogen nitrogen sulfur-containing compound, and a 1,2-benzisothiazoline-3-one (e.g., PROXEL GXL, manufactured by Lonza Japan Co., Ltd.). Examples of the pH adjusting agent include Urea and sodium hydroxide.

### [Liquid properties of color ink]

### (pH)

The color ink according to the present invention preferably has a pH value of 7.0 or more and 11.0 or less, and more preferably 7.0 or more and 8.0 or less. When the pH value of the color ink is within this range, the storage stability of the dye in the ink is improved, and the change in color development and the change in hue of the obtained image hardly occur.

### (Surface tension)

In the present invention, the color ink for inkjet printing preferably has a surface tension at 20 °C within a range of 20 to 40 mN/m, and more preferably within a range of 30 to 36 mN/m, from the viewpoint of balance between printing quality and reliability as an inkjet ink. When the surface tension of the color ink is within the range defined above, the ejection stability is excellent in inkjet printing, and at the same time, the color ink tends to be uniformly wetted and spread on the fabric when adhering to the fabric, so that it is easy to penetrate. This makes it easier for the color ink to fix to the fabric.

The surface tension may be measured, for example, by checking the static surface tension when the platinum plate is wetted with the ink at 20 °C using an automated surface tension meter CBVP-Z (trade name, manufactured by Kyowa Interface Science Co., Ltd.).

### (Viscosity)

Further, the viscosity of the color ink at 20 °C is preferably within a range of 1.5 to 10 mPa·s, more preferably within a range of 2 to 8 mPa·s, and still more preferably within a range of 4 to 5.5 mPa·s. When the viscosity of the ink at 20 °C is in the above range, it becomes easier to fix the ink when the ink adheres to the fabric, and the color development is improved.

In the present invention, the viscosity of the color ink may be measured using, for example, a cone plate type viscometer, for example, a viscometer TVE-33LT manufactured by Toki Sangyo Co., Ltd.

### [Preparing method of color ink]

In the present invention, the color ink according to the present invention is obtained by mixing each of the above-described components in an arbitrary order and performing filtration if necessary to remove impurities. As a method of mixing each component, a method in which a material is sequentially added to a container equipped with a stirring device such as a mechanical stirrer or a magnetic stirrer and stirred and mixed is suitably used. As a filtration method, centrifugal filtration, or filter filtration may be performed as necessary.

### <<Inkjet printing method>>

The inkjet printing method of the present invention (hereinafter, simply referred to as "printing method") is characterized in that a penetration liquid for inkjet printing and a color ink for inkjet printing according to claim 1 are used and after the penetration liquid for inkjet printing is adhered to a fabric, the color ink for inkjet printing is adhered to form a printing image.

The printing method of the present invention is performed by inkjet recording in which ink droplets are ejected by an inkjet head portion. The inkjet head may be an on-demand type or a continuous type. The ejection method of the inkjet head may be any of the ejection methods such as electric-mechanical conversion method (e.g., single cavity type, double cavity type, bender type, piston type, share mode type, share wall type), and electric-thermal conversion method (e.g., thermal inkjet type, bubble jet (registered trademark) type).

In the printing method of the present invention, there is no particular limitation on the printing method, and either the single-pass type or the scan type may be used, but the single-pass type is preferable from the viewpoint of being effective for high-speed printing. The single-pass type inkjet recording method is an inkjet recording method in which all dots for forming pixels are ejected in a single-pass when the recording medium passes under one inkjet head unit.

As a means for achieving the single-pass type image forming method, it is preferable to use a line head type inkjet head.

### [Inkjet printing apparatus]

First, an example of an inkjet printing apparatus applicable to the inkjet printing method of the present invention will be described with reference to the drawings.

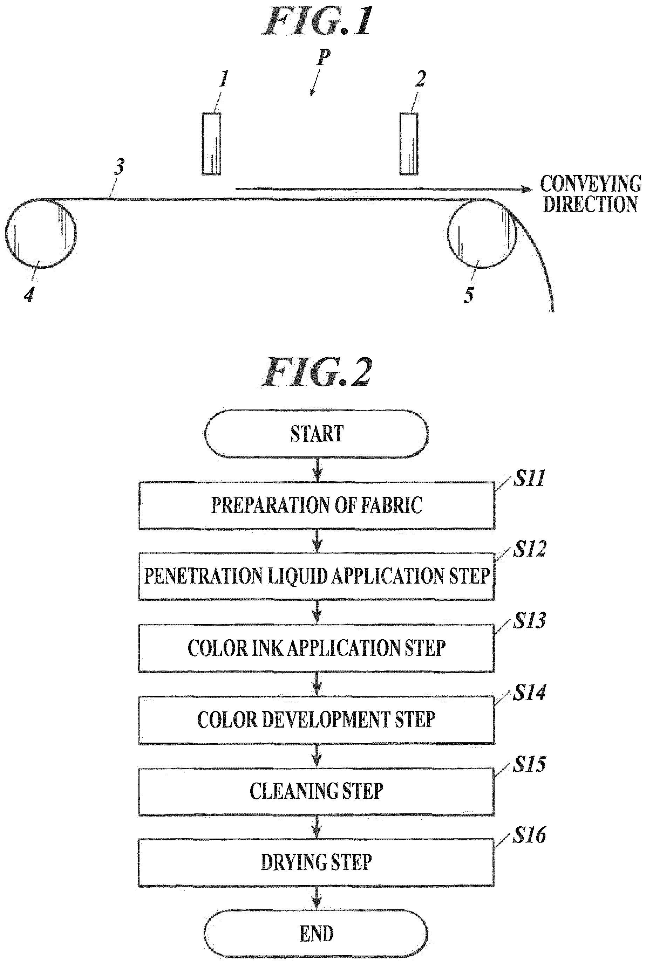

FIG. 1 is a schematic diagram illustrating a part of a step of printing on a fabric using a penetration liquid and a color ink in a configuration of an inkjet recording apparatus P applicable to an inkjet printing method used in an example described later.

The inkjet recording apparatus P shown in FIG. 1 is provided with a first head carriage 1 and a second head carriage 2. An inkjet head is mounted on the first head carriage 1, and a penetration liquid is loaded in the head. The second head carriage 2 contains multiple heads, such as a head for ejection of a yellow ink, a head for ejection of a magenta ink, a head for ejection of a cyan ink, and a head for ejection of a black ink, each of which is loaded with the corresponding color ink. The fabric 3 is conveyed in the conveying direction shown in the figure by the conveying roller 4 and the conveying roller 5. In the present invention, after the penetration liquid is adhered to the fabric 3, the color ink is adhered to form a printing image.

Therefore, as a first step, for example, after 15 mL/m² of the penetration liquid is uniformly applied to the entire surface of the fabric 3 from the two heads of the first head carriage 1 to the conveyed fabric 3, as a second step, images of color inks are printed from the two heads of the second carriage 2.

### (Fabric)

In the present invention, as long as the material constituting the fabric used in the inkjet printing method contains fibers that may be dyed with a color material, there is no particular limitation, but among them, at least one kind selected from cotton, silk, hemp, wool, nylon fiber, rayon fiber, acetate fiber, polyester fiber and blended spinning thereof are preferred. As the fabric, any of the above-mentioned fibers may be used in the form of a woven fabric, a knitted fabric, or a nonwoven fabric. Further, as a fabric which may be used in the present invention, it is suitable that a fiber that may be dyed with a color material is 100%, but a blended woven fabric or a blended nonwoven fabric may be used as a fabric for printing. In addition, as the thickness of the yarn constituting the fabric as described above, a range of 10 to 100d is preferable.

The combination of the fabric and the dye is not particularly limited, and examples thereof include: a reactive dye and fibers containing cellulose as a main component (cotton, hemp, or rayon), an acid dye and silk, wool, or nylon fibers, a basic dye and acrylic fibers, a direct dye and cotton, hemp, or rayon, and a disperse dye and polyester fibers. Among these, a reactive dye and a fiber containing cellulose as a main component, and an acid dye and silk, wool, or nylon fibers are preferred. Such a combination tends to further suppress the difference in the coloring property between the front and back surfaces of the printed material. However, the combination of fabric and dye is not limited thereto.

### (Inkjet head)

In the inkjet printing method of the present invention, a penetration liquid and a color ink are imparted onto a fabric using an inkjet head. By applying the penetration liquid and the color ink with each of the heads, it is possible to uniformly impart the necessary penetration liquid and the color ink to the required portion without unevenness.

The heads used to apply the penetration liquid and the color ink to the fabric may be mounted on the same carriage or on separate and independent carriages as illustrated in FIG. 1, however, the latter form is preferred in the present invention. When the head for applying the penetration liquid is mounted on another carriage, a drying device for drying the penetration liquid applied to the fabric may be provided between the time when the penetration liquid is applied and the time when the color ink is applied.

### [Inkjet printing process]

Next, a process of the inkjet printing method of the present invention will be described using a process flow diagram.

FIG. 2 is a process flow diagram illustrating an example of a printing process in an inkjet printing method.

Hereinafter, details of each step in the printing process will be described.

### (Step S11: Preparation of fabric)

A fabric to be a print is prepared.

### (Step S12: Penetration liquid application step)

The penetration liquid application step (Step S12) is a step arranged before the color ink application step (Step S13) to be described later, and the penetration liquid is imparted to the fabric in this step.

In the penetration liquid application step (Step S12), when the penetration liquid is applied to the fabric, the penetration liquid may be applied to the front surface of the fabric by an inkjet method, or may be applied to the back surface, or may be applied to both the front surface and the back surface. Further, the penetration liquid may be applied to the entire surface of the fabric or may be imparted by selecting a printing area to which the color ink is applied. The amount of the penetration liquid applied to the fabric is not particularly limited, and may be appropriately set, for example, within the range of 1 to 100 mL/m², preferably within the range of 2 to 50 mL/m², depending on the characteristics of the fabric to be applied and the amount of the color inks to be applied.

After applying the penetration liquid to the fabric, a drying step may be provided before the step of applying the color ink, if necessary.

### (Step S13: Color ink application step)

The color ink application step (Step S13) is a step of applying a color ink to the fabric to which the penetration liquid has been imparted in the penetration liquid application step in Step S12 described above to form an image before color development. For example, while the fabric is relatively moved relative to a second head carriage on which a plurality of heads are mounted, a droplet of each color ink is ejected from the head to land on the entire surface of the fabric (solid image) or an arbitrary region, thereby forming an image before color development. Note that when an image is formed using inks of a plurality of colors including the ink of the present invention, ink droplets of each color may be separately ejected or simultaneously ejected. From the viewpoint of suppressing bleeding of the pre-color development image, the fabric may be heated if necessary to perform Step S13.

In addition, in the present invention, after the step of imparting the penetration liquid in Step S12 described above, at least a part of the penetration liquid may be dried, and then the color ink may be imparted in the color ink application step in Step S13, or the inkjet printing method may be used in which Step S12 to Step S13 are performed on a continuous online. However, it is preferable that each step shown in the latter is a continuous online method. By continuous online referred to in the present invention is meant that, as schematically shown in FIG. 1, the application of the penetration liquid by Step S12 and the application of the color ink to the fabric by Step S13, and further, the color development step, the washing step, and the drying step described below are continuously performed on the same line without cutting the fabric halfway.

### (Step S14: Color development step)

The color development step (Step S14) is a step of imparting a high temperature vapor to the fabric on which the image before color development is formed in Step S13 to fix the color material to the fibers of the fabric. The original hue of the ink is developed by the color development process. Examples of the method of fixing the color material to the fibers of the fabric include a steaming method, an HT steaming method, an HP steaming method, a thermofix method, an alkali pad steam method, an alkali blotch steam method, an alkali shock method, and an alkali cold fix method.

In a steaming method using a high-temperature steam, when the heating temperature is too low, a large amount of water of a liquid is present, so that a reactive dye contained in a dark color ink or a light color ink tends to be easily hydrogen-bonded to water of a liquid other than a fabric, so that it tends to flow together with water, and thus, there is a case where it cannot be sufficiently dyed. Therefore, from the viewpoint of strengthening dyeing of the reactive dye to the fabric, the heating temperature is preferably 95 °C or more, and more preferably 100 °C or more. For example, it is preferred that the cellulose fibers be treated at 95 to 105 °C for 5 to 15 minutes. Further, the fabric to which the ink is applied may be immediately developed into color, and may be developed after a lapse of time.

### (Step S15: Cleaning step)

The cleaning step is a step of removing a penetration liquid or a dye which is a color material and cannot be dyed into a fabric after the color development step in Step S14 described above. The removal of the color material which cannot be dyed to the fabric may be performed using a conventionally known cleaning method, and is appropriately selected depending on the type of the dye constituting the color ink and the type of the fabric. For example, cellulose fibers are generally washed with water and hot water, then treated with a soaping bath containing a nonionic detergent, and then washed with hot water and water. By removing the dye which is not dyed, washing fastness, water fastness, and sweat fastness tend to be good.

### (Step S16: Drying step)

The drying step in Step S16 is performed after the cleaning step in Step S15 described above, and it is a step of drying the washed fabric. The drying method is not particularly limited, but may be a method in which a washed fabric is squeezed, dried, or dried using a dryer (heat roll or iron).

### (Other steps)

In the inkjet printing method of the present invention, a pretreatment step may be provided to provide a pretreatment agent containing a water-soluble polymer as a glue agent in order to prevent bleeding of color ink on a fabric and obtain a sharp image before the step of imparting the penetration liquid in Step S12. Examples of the method of imparting a pretreatment agent include a pad method, a coating method and a spray method.

Further, after the color ink is imparted to the fabric in the step of applying the color ink in Step S13, a preliminary drying step for drying the color ink may be provided before the color development step in Step S14. Examples of the drying method include an air convection method, a heating roll direct mounting method, and an irradiation method.

### EXAMPLES

Hereinafter, the present invention will be specifically described by way of Examples, but the present invention is not limited thereto. In the examples, "parts" or "%" is used, but unless otherwise specified, it indicates "parts by mass" or "% by mass". Each operation was performed at room temperature (25 °C) unless otherwise specified.

### <<Preparation of penetration liquid>>

Penetration liquids 1 to 10 were prepared according to the method described below.

### [Preparation of penetration liquid 1]

To a container for preparation, each of the following additives was sequentially added and mixed, and thoroughly stirred, and then the mixed liquid was passed into a hollow fiber membrane (manufactured by Mitsubishi Chemical Corporation) having gas permeability, and the outer surface side of the hollow fiber membrane was reduced in pressure by a water flow aspirator to remove the dissolved gas in the mixed liquid to prepare a penetration liquid 1.

### (Organic solvent)

Diethylene glycol monobutyl ether (abbreviation: DEGMBE, boiling point: 230 °C): 30.0% by mass (Surfactant A)
BYK-348 (polyether-modified siloxane, manufactured by BYK Chemie Japan KK): 4.9% by mass (Preservative)
PROXEL GXL (1,2-benzisothiazoline-3-one, manufactured by Lonza Japan Co., Ltd.): 0.2% by mass (Water)
Ion-exchanged water: Amount that becomes 100% by mass as a total amount

### [Preparation of penetration liquid 2]

In the preparation of the above penetration liquid 1, a penetration liquid 2 was prepared in the same manner except that the content of BYK-348 as a surfactant A was changed from 4.9% by mass to 3.0% by mass.

### [Preparation of penetration liquid 3]

In the preparation of the above penetration liquid 1, a penetration liquid 3 was prepared in the same manner except that the following surfactant was used instead of BYK-348 (content: 4.9% by mass) as a surfactant A.

### (Surfactant A)

OLFINE El010 (acetylene glycol-based surfactant manufactured by Nissin Chemical Industry Co., Ltd.): 2.0 % by mass

### [Preparation of penetration liquid 4]

In the preparation of the above penetration liquid 3, a penetration liquid 4 was prepared in the same manner except that the content of OLFINE E1010 as a surfactant A was changed to 3.0% by mass.

### [Preparation of penetration liquid 5]

In the preparation of the above penetration liquid 3, a penetration liquid 5 was prepared in the same manner except that the content of OLFINE E1010 as a surfactant A was changed to 4.8% by mass.

### [Preparation of penetration liquid 6]

In the preparation of the above penetration liquid 4, a penetration liquid 6 was prepared in the same manner except that the organic solvent composition was changed to the following configuration.

### (Organic solvents)

Glycerin (abbreviation: Gly, boiling point: 290 °C): 10.0% by mass
Propylene glycol (abbreviation: PG, boiling point: 188 °C): 20.0% by mass

### [Preparation of permeate 7]

In the preparation of the above penetration liquid 4, a penetration liquid 7 was prepared in the same manner except that the organic solvent composition was changed to the following configuration.

### (Organic solvents)

Propylene glycol (abbreviation: PG, boiling point: 188 °C): 20.0% by mass
Ethylene glycol (abbreviation: EG, boiling point: 197 °C): 10.0% by mass

### [Preparation of permeate 8]

In the preparation of the above penetration liquid 7, a penetration liquid 8 was prepared in the same manner except that the content of propylene glycol (abbreviation: PG) as an organic solvent was changed to 50.0% by mass.

### [Preparation of permeate 9]

In the preparation of the above penetration liquid 7, a penetration liquid 9 was prepared in the same manner except that the surfactant A (OLFINE E1010) was removed.

### [Preparation of penetration liquid 10]

In the preparation of the above penetration liquid 3, a penetration liquid 10 was prepared in the same manner except that the content of OLFINE E1010 as a surfactant A was changed to 1.5% by mass.

The configuration of each of the penetration liquids prepared above is shown in Table I.

**Table 1**

| Penetration liquid No. | | 1 | 2 | 3 | 4 | 5 | 6 | 7 | 8 | 9 | 10 |
|---|---|---|---|---|---|---|---|---|---|---|---|
| Organic solvent the figure in the parentheses is a boiling point. | DEGMBE(230) | 30.0 | 30.0 | 30.0 | 30.0 | 30.0 | - | - | - | 30.0 | 30.0 |
| | Gly(290) | - | - | - | - | - | 10.0 | - | - | - | - |
| | PG(188) | - | - | - | - | - | 20.0 | 20.0 | 50.0 | - | - |
| | EG(197) | - | - | - | - | - | - | 10.0 | 10.0 | - | - |
| Surfactant A | OLFINE E1010 | - | - | 2.0 | 3.0 | 4.8 | 3.0 | 3.0 | 3.0 | - | 1.5 |
| | BYK-348 | 4.9 | 3.0 | - | - | - | - | - | - | - | - |
| Preservative | PROXEL GXL | 0.2 | 0.2 | 0.2 | 0.2 | 0.2 | 0.2 | 0.2 | 0.2 | 0.2 | 0.2 |
| Water | Ion-exchanged water | The remaining portion | The remaining portion | The remaining portion | The remaining portion | The remaining portion | The remaining portion | The remaining portion | The remaining portion | The remaining portion | The remaining portion |
| Total mass (% by mass) | | 100 | 100 | 100 | 100 | 100 | 100 | 100 | 100 | 100 | 100 |

| | | | | | | | | | | | |
|---|---|---|---|---|---|---|---|---|---|---|---|
| DEGMBE: Diethylene glycol monobutyl ether Unit % by mass Gly: Glycerin PG: Propylene glycol EG: Ethylene glycol | | | | | | | | | | | |

### <<Preparation of color ink>>

A black ink (K ink) was prepared as a color ink according to the following method.

### [Preparation of black ink 1]

Each of the following additives was sequentially added and mixed, and sufficiently stirred, and then the ink mixture was passed through a hollow fiber membrane (manufactured by Mitsubishi Chemical Corporation) having gas permeability, and the outer surface side of the hollow fiber membrane was reduced in pressure by a water flow aspirator to remove the dissolved gas in the penetration liquid to prepare a black ink 1.

### (Organic solvents)

Ethylene glycol: 20.0% by mass
Glycerin: 10.0% by mass

### (Color material)

Reactive dye C.I. Reactive Black 5: 20.0% by mass

### (Surfactant B)

OLFINE PD002W (acetylene glycolic-based surfactant manufactured by Nissin Chemical Industries, Ltd.): 0.06% by mass

### (Preservative)

PROXEL GXL (1,2-benzisothiazoline-3-one, manufactured by Lonza Japan Co., Ltd.): 0.2% by mass

### (Water)

Ion-exchanged water: Amount that becomes 100% by mass as a total amount

### <<Preparation of print>>

### [Preparation of print 1]

According to the following inkjet recording method, a print 1 was prepared using the above prepared penetration liquid 1 and the black ink 1.

### (Inkjet recording method)

Using the inkjet recording apparatus P shown in FIG. 1, a printed 1 was produced.

The first head carriage 1 and the second head carriage 2 are installed in the inkjet recording apparatus P shown in FIG. 1. The first head carriage 1 is mounted with two heads (modified piezo-type inkjet head Nassenger V manufactured by Konica Minolta, Inc.) and is loaded with a penetration liquid 1. The second head carriage 2 is mounted with two heads (modified piezo-type inkjet head Nassenger V manufactured by Konica Minolta, Inc.), and a black ink 1 is loaded as a color ink. The fabric 3 is conveyed in the conveying direction shown in the figure by conveying rollers 4 and 5. Cotton broadcloth was used as a fabric 3.

In the fabric 3 conveyed to the right of the drawing, a total of 15 mL/m² of the penetration liquid was uniformly applied to the entire surface of the fabric from the two heads of the first head carriage 1.

Next, a solid image of the black ink 1 was printed from the two heads of the second carriage 2. Thereafter, according to a conventional method, a print 1 was produced through a color forming step, a washing step, and a drying step.

### [Preparation of prints 2 to 10]

In the preparation of the above-mentioned print 1, the prints 2 to 10 were prepared in the same manner except that the penetration liquids 2 to 10 were used instead of the penetration liquid 1.

### [Preparation of print 11]

In the preparation of the print 1, the print 11 was produced in the same manner as described above except that the application of the penetration liquid 1 was not performed.

### «Evaluation of prints»

The following evaluations were performed on each of the prints produced as described above.

### [Evaluation of permeability]

Reflection brightness L* values on the front side and the back side of each print produced above were measured in accordance with JIS Z 8730-2009 using a colorimeter (X-Rite 938). The difference in L* values was calculated, ranked according to the following criteria, and the permeability was evaluated.

AA: The difference between L* values on the front side and the back side is less than 2.0.
BB: The difference between L* values on the front side and the back side is 2.0 or more and less than 5.0.
CC: The difference between L* values on the front and back sides is 5.0 or more and less than 10.0.
DD: The difference between L* values on the front and back sides is 10.0 or more.

### [Evaluation of color unevenness resistance]

The presence or absence of uneven color development of the entire black image of each of the above-prepared prints was visually observed, and the color unevenness resistance was evaluated according to the following criteria.

AA: No uneven color development is observed.
BB: Extremely weak color unevenness is observed in several places, but the quality is not a problem at all.
CC: Slightly weak color unevenness is observed in several places, but the quality is not a problem in practical use.
DD: Obviously, a large number of strong coloring irregularities are generated, and the quality cannot withstand practical use.

### [Evaluation of color development]

A reflection brightness L* value of the surface of each black image produced by the above method was measured using a colorimeter (X-Rite 938) in accordance with JIS Z 8730-2009, and the difference (absolute value) of L* value with the reference sample of the black image was obtained, and the colorimetric evaluation was evaluated according to the following criteria.

| | |
|---|---|
| AA: | The difference in L* value with the reference sample is less than 1.0. |
| BB: | The difference in L* value with the reference samples is 1.0 or more and less than 2.0. |
| CC: | The difference in L* value with the reference sample is 2.0 or more and less than 5.0. |
| DD: | The differences in L* value with the reference samples is 5.0 or more. |

The results obtained by the above evaluations are shown in Table II.

**Table II**

| Print No. | Penetration liquid | | | Color ink | | *1 | Evaluation result | | | Remarks |
|---|---|---|---|---|---|---|---|---|---|---|
| | No. | Surfactant A | | No. | Surfactant B (% by mass) | | permeability | Color unevenness resistance | Color development | |
| | | Type | % by mass | | | | | | | |
| 1 | 1 | BYK-348 | 4.9 | Black ink 1 | 0.06 | 81.2 | CC | CC | CC | Present Invention |
| 2 | 2 | BYK-348 | 3.0 | Black ink 1 | 0.06 | 50.0 | CC | CC | BB | Present Invention |
| 3 | 3 | OLFINE E1010 | 2.0 | Black ink 1 | 0.06 | 33.3 | CC | CC | BB | Present Invention |
| 4 | 4 | OLFINE E1010 | 3.0 | Black ink 1 | 0.06 | 50.0 | BB | BB | BB | Present Invention |
| 5 | 5 | OLFINE E1010 | 4.8 | Black ink 1 | 0.06 | 80.0 | CC | CC | BB | Present Invention |
| 6 | 6 | OLFINE E1010 | 3.0 | Black ink 1 | 0.06 | 50.0 | AA | BB | BB | Present Invention |
| 7 | 7 | OLFINE E1010 | 3.0 | Black ink 1 | 0.06 | 50.0 | AA | AA | BB | Present Invention |
| 8 | 8 | OLFINE E1010 | 3.0 | Black ink 1 | 0.06 | 50.0 | AA | AA | AA | Present Invention |
| 9 | 9 | - | - | Black ink 1 | 0.06 | - | DD | DD | DD | Comparative Example |
| 10 | 10 | OLFINE E1010 | 1.5 | Black ink 1 | 0.06 | 25.0 | DD | CC | CC | Comparative |
| 11 | - | - | - | Black ink 1 | 0.06 | - | DD | DD | AA | Example Comparative Example |

| | | | | | | | | | | |
|---|---|---|---|---|---|---|---|---|---|---|
| *1: [Surfactant A (% by mass)]/[Surfactant B (% by mass)] | | | | | | | | | | |

As is apparent from the results described in Table II, it can be seen that a print produced by an inkjet printing method using an ink set for inkjet printing containing a penetration liquid having a configuration defined in the present invention is excellent in permeability, color unevenness resistance and color development of a color ink into a fabric compared with a comparative example.

### Description of Symbols

1: First head carriage
2: Second head carriage
3: Fabric
4 and 5: Conveying roller
P: Inkjet recording apparatus

## Claims

1. An ink set for inkjet printing comprising at least a penetration liquid for inkjet printing and a color ink for inkjet printing, wherein the penetration liquid for inkjet printing contains a surfactant A, an organic solvent, and water, a total content of the surfactant A is 2% by mass or more; the color ink for inkjet printing contains a dye, wherein the total content of the surfactant A contained in the penetration liquid for inkjet printing is 30 times or more and less than 80 times a total content of a surfactant B contained in the color ink for inkjet printing.

2. The ink set for inkjet printing described in claim 1, wherein the total content of the surfactant A in the penetration liquid for inkjet printing is less than 5% by mass.

3. The ink set for inkjet printing described in any one of claims 1 or 2, wherein the surfactant A contained in the penetration liquid for inkjet printing is at least one selected from acetylene glycol-based surfactants.

4. The ink set for inkjet printing described in any one of claims 1 to 3, wherein the organic solvent contained in the penetration liquid for inkjet printing is at least one selected from alkyl polyols.

5. The ink set for inkjet printing described in claim 4, wherein a boiling point of the alkyl polyol contained in the penetration liquid for inkjet printing is 200 °C or less.

6. The ink set for inkjet printing described in any one of claims 1 to 5, wherein the total content of the organic solvent contained in the permeation liquid for inkjet printing is 40% by mass or more.

7. A method of inkjet printing using a penetration liquid for inkjet printing and a color ink for inkjet printing, wherein the penetration liquid for inkjet printing contains a surfactant A, an organic solvent, and water; a total content of the surfactant A is 2% by mass or more; the color ink for inkjet printing contains a dye and wherein the total content of the surfactant A contained in the penetration liquid for inkjet printing is 30 times or more and less than 80 times a total content of a surfactant B contained in the color ink for inkjet printing, the method of inkjet printing comprising the sequential steps of: adhering the penetration liquid for inkjet printing on a fabric; and forming a printing image on the fabric with the color ink for inkjet printing.

8. The method of inkjet printing described in claim 7, wherein the total content of the surfactant A in the penetration liquid for inkjet printing is less than 5% by mass.

9. The method of inkjet printing described in claim 7 or 8, wherein the surfactant A contained in the penetration liquid for inkjet printing is at least one selected from acetylene glycol-based surfactants.

10. The method of inkjet printing described in any one of claims 7 to 9, wherein the organic solvent contained in the penetration liquid for inkjet printing is at least one selected from alkyl polyols.

11. The method of inkjet printing described in claim 10, wherein a boiling point of the alkyl polyol contained in the penetration liquid for inkjet printing is 200 °C or less.

12. The method of inkjet printing described in any one of claims 7 to 11, wherein the total content of the organic solvent contained in the permeation liquid for inkjet printing is 40% by mass or more.

## Patentansprüche

1. Ein Tintensatz für einen Tintenstrahldruck, der mindestens eine Penetrationsflüssigkeit für den Tintenstrahldruck und eine Farbtinte für den Tintenstrahldruck umfasst, wobei die Penetrationsflüssigkeit für den Tintenstrahldruck ein oberflächenaktives Mittel A, ein organisches Lösungsmittel und Wasser enthält, wobei der Gesamtgehalt des oberflächenaktiven Mittels A 2 Gew.-% oder mehr beträgt; die Farbtinte für den Tintenstrahldruck einen Farbstoff enthält, wobei der Gesamtgehalt des oberflächenaktiven Mittels A, welches in der Penetrationsflüssigkeit für den Tintenstrahldruck enthalten ist, das 30-fache oder mehr und weniger als das 80-fache des Gesamtgehalts eines oberflächenaktiven Mittels B beträgt, das in der Farbtinte für den Tintenstrahldruck enthalten ist.

2. Der Tintensatz für den Tintenstrahldruck nach Anspruch 1, wobei der Gesamtgehalt des oberflächenaktiven Mittels A in der Penetrationsflüssigkeit für den Tintenstrahldruck weniger als 5 Gew.-% beträgt.

3. Der Tintensatz für den Tintenstrahldruck nach einem der Ansprüche 1 oder 2, wobei das in der Penetrationsflüssigkeit für den Tintenstrahldruck enthaltene oberflächenaktive Mittel A mindestens eines ist, das aus Tensiden auf Acetylenglykolbasis ausgewählt ist.

4. Der Tintensatz für den Tintenstrahldruck nach einem der Ansprüche 1 bis 3, wobei das in der Penetrationsflüssigkeit für den Tintenstrahldruck enthaltene organische Lösungsmittel mindestens eines ist, das aus Alkylpolyolen ausgewählt ist.

5. Der Tintensatz für den Tintenstrahldruck nach Anspruch 4, wobei der Siedepunkt des in der Penetrationsflüssigkeit für den Tintenstrahldruck enthaltenen Alkylpolyols 200 °C oder weniger beträgt.

6. Der Tintensatz für den Tintenstrahldruck nach einem der Ansprüche 1 bis 5, wobei der Gesamtgehalt des in der Penetrationsflüssigkeit für den Tintenstrahldruck enthaltenen organischen Lösungsmittels 40 Gew.-% oder mehr beträgt.

7. Ein Verfahren zum Tintenstrahldrucken unter Verwendung einer Penetrationsflüssigkeit für das Tintenstrahldrucken und einer Farbtinte für das Tintenstrahldrucken, wobei die Penetrationsflüssigkeit für das Tintenstrahldrucken ein oberflächenaktives Mittel A, ein organisches Lösungsmittel und Wasser enthält; ein Gesamtgehalt des oberflächenaktiven Mittels A 2 Gew.-% oder mehr beträgt; die Farbtinte für den Tintenstrahldruck einen Farbstoff enthält und wobei der Gesamtgehalt des Tensids A, das in der Penetrationsflüssigkeit für den Tintenstrahldruck enthalten ist, das 30-fache oder mehr und weniger als das 80-fache des Gesamtgehalts eines Tensids B, das in der Farbtinte für den Tintenstrahldruck enthalten ist, beträgt, wobei das Verfahren zum Tintenstrahldrucken die folgenden aufeinanderfolgenden Schritte umfasst: Aufbringen der Penetrationsflüssigkeit für den Tintenstrahldruck auf ein Gewebe; und Erzeugen eines Druckbildes auf dem Gewebe mit der Farbtinte für den Tintenstrahldruck.

8. Verfahren zum Tintenstrahldrucken nach Anspruch 7, wobei der Gesamtgehalt des Tensids A in der Penetrationsflüssigkeit für den Tintenstrahldruck weniger als 5 Gew.-% beträgt.

9. Tintenstrahldruckverfahren nach Anspruch 7 oder 8, wobei das in der Penetrationsflüssigkeit für den Tintenstrahldruck enthaltene Tensid A mindestens eines ist, welches aus Tensiden auf Acetylenglykolbasis ausgewählt ist.

10. Tintenstrahldruckverfahren nach einem der Ansprüche 7 bis 9, wobei das in der Penetrationsflüssigkeit für den Tintenstrahldruck enthaltene organische Lösungsmittel mindestens eines ist, welches aus Alkylpolyolen ausgewählt ist.

11. Verfahren zum Tintenstrahldrucken nach Anspruch 10, wobei der Siedepunkt des in der Penetrationsflüssigkeit für den Tintenstrahldruck enthaltenen Alkylpolyols 200 °C oder weniger beträgt.

12. Verfahren zum Tintenstrahldrucken nach einem der Ansprüche 7 bis 11, wobei der Gesamtgehalt des in der Penetrationsflüssigkeit für den Tintenstrahldruck enthaltenen organischen Lösungsmittels 40 Gew.-% oder mehr beträgt.

## Revendications

1. Ensemble d'encres pour l'impression à jet d'encre comprenant au moins un liquide de pénétration pour l'impression à jet d'encre et une encre de couleur pour l'impression à jet d'encre, dans lequel le liquide de pénétration pour l'impression à jet d'encre contient un agent tensioactif A, un solvant organique et de l'eau, une teneur totale de l'agent tensioactif A est de 2% en masse ou plus ; l'encre de couleur pour l'impression à jet d'encre contient un colorant, dans lequel la teneur totale de l'agent tensioactif A contenu dans le liquide de pénétration pour l'impression à jet d'encre est 30 fois ou plus et moins de 80 fois une teneur totale d'un agent tensioactif B contenu dans l'encre de couleur pour l'impression à jet d'encre.

2. Ensemble d'encres pour l'impression à jet d'encre décrit dans la revendication 1, dans lequel la teneur totale de l'agent tensioactif A dans le liquide de pénétration pour l'impression à jet d'encre est moins de 5 % en masse.

3. Ensemble d'encres pour l'impression à jet d'encre décrit dans l'une quelconque des revendications 1 ou 2, dans lequel l'agent tensioactif A contenu dans le liquide de pénétration pour l'impression à jet d'encre est au moins un choisi parmi les agents tensioactifs à base d'acétylène glycol.

4. Ensemble d'encres pour l'impression à jet d'encre décrit dans l'une quelconque des revendications 1 à 3, dans lequel le solvant organique contenu dans le liquide de pénétration pour l'impression à jet d'encre est au moins un choisi parmi les polyols d'alkyle.

5. Ensemble d'encres pour l'impression à jet d'encre décrit dans la revendication 4, dans lequel le point d'ébullition du polyol d'alkyle contenu dans le liquide de pénétration pour l'impression à jet d'encre est égal à 200 °C ou moins.

6. Ensemble d'encres pour l'impression à jet d'encre décrit dans l'une des revendications 1 à 5, dans lequel la teneur totale du solvant organique contenu dans le liquide de perméation pour l'impression à jet d'encre est de 40 % en masse ou plus.

7. Procédé d'impression à jet d'encre utilisant un liquide de pénétration pour l'impression à jet d'encre et une encre de couleur pour l'impression à jet d'encre, dans lequel le liquide de pénétration pour l'impression à jet d'encre contient un agent tensioactif A, un solvant organique et de l'eau ; la teneur totale de l'agent tensioactif A est de 2 % en masse ou plus; l'encre de couleur pour l'impression à jet d'encre contient un colorant et dans laquelle la teneur totale de l'agent tensioactif A contenu dans le liquide de pénétration pour l'impression à jet d'encre est 30 fois ou plus et moins de 80 fois la teneur totale d'un agent tensioactif B contenu dans l'encre de couleur pour l'impression à jet d'encre, la méthode d'impression à jet d'encre comprenant les étapes séquentielles suivantes : faire adhérer le liquide de pénétration pour l'impression à jet d'encre sur un tissu ; et former une image d'impression sur le tissu avec l'encre de couleur pour l'impression à jet d'encre.

8. Procédé d'impression à jet d'encre décrit dans la revendication 7, dans lequel la teneur totale de l'agent tensioactif A dans le liquide de pénétration pour l'impression à jet d'encre est moins de 5 % en masse.

9. Procédé d'impression à jet d'encre décrit dans la revendication 7 ou 8, dans lequel l'agent de surface A contenu dans le liquide de pénétration pour l'impression à jet d'encre est au moins choisi parmi les agents tensioactifs à base d'acétylène glycol.

10. Procédé d'impression à jet d'encre décrit dans l'une quelconque des revendications 7 à 9, dans lequel le solvant organique contenu dans le liquide de pénétration pour l'impression à jet d'encre est au moins choisi parmi des polyols d'alkyle.

11. Procédé d'impression à jet d'encre décrit dans la revendication 10, dans lequel un point d'ébullition du polyol d'alkyle contenu dans le liquide de pénétration pour l'impression à jet d'encre est 200 °C ou moins.

12. Procédé d'impression à jet d'encre décrit dans l'une quelconque des revendications 7 à 11, dans lequel la teneur totale du solvant organique contenu dans le liquide de perméation pour l'impression à jet d'encre est 40 % en masse ou plus.
